# EUROPEAN PATENT SPECIFICATION

(11) **EP 1 344 416 B1**
(45) Date of publication and mention of the grant of the patent: **26.09.2007**
(21) Application number: 01982517.3
(22) Date of filing: 12.11.2001
(51) Int. Cl.: H04Q 7/22

(54) **METHOD FOR TRANSMITTING PACKETS OVER CIRCUIT-SWITCHED NETWORK**
VERFAHREN ZUM SENDEN VON PAKETEN ÜBER LEITUNGSVERMITTELTE NETZWERKE
PROCEDE DE TRANSMISSION DE PAQUETS SUR UN RESEAU A COMMUTATION DE CIRCUITS

(30) Priority: 14.11.2000 FI 20002491
(43) Date of publication of application: 17.09.2003
(73) Proprietor: Nokia Corporation, 02150 Espoo (FI)
(72) Inventor: MONONEN, Risto, 02680 Espoo (FI)
(74) Representative: Niemi, Hakan Henrik
(86) International application number: PCT/FI2001/000980
(87) International publication number: WO 2002/041654

(56) References cited:
- EP-A2- 0 835 037
- EP-A2- 0 982 909
- WO-A1-00/52940
- US-A- 6 018 530

## Description

### FIELD OF THE INVENTION

The invention relates to a method for transmitting a packet from a source to a destination on the basis of an IP header in a packet network employing an IP protocol.

### BACKGROUND OF THE INVENTION

In the GPRS network (General Packet Radio System), for example, data is transmitted in data packets. Data transmission networks employ various protocols, such as the TCP/IP (Transmission Control Protocol/Internet Protocol), to form gateways from a mobile phone, for example, to different packet data networks. The packet-switched data transmission referred to means that each packet can be transferred to its destination address on a separate route, regardless of the route on which the previous packet was transferred.

An IP packet to be transmitted comprises a header consisting of a plural number of fields which represent: IP protocol version number (version field); header length (IHL field); service type (Differentiated Services Code Point, DSCP); total packet size (Total Length field); individual identifier (Identification field); fragmentation (Flags field); fragment size (Fragment field); packet lifetime (Time to Live field); payload protocol number (Protocol field); checksum (Header Checksum field); the sender's IP address (Source Address field); the receiver's IP address (Destination field); options (Options field), if any; and the filling of the header (Padding field), if needed.

The header size may be 20 octets, for example, which corresponds to 160 bits. The header fields may be subjected to compression to provide added capacity for the payload. Compression methods are not, however, optimal for use in every environment because the network equipment is not necessarily capable of processing compressed header fields in a desired manner.

In ATM (Asynchronous Transfer Mode) networks data transmission is based on packets of 53 bytes. Each packet contains five bytes reserved for ATM address fields, such as VPI (Virtual Path Identifier) and VCI (Virtual Channel Identifier) header fields. Together these header fields define what is known as a virtual connection, on which data are transmitted. The header fields comprise identifier parameters, the values of which are changed from time to time by means of signalling.

The networks apply different methods for transmitting IP packets from one location to another. One of the methods is routing, in which an IP packet received by an IP router in an OSI (Open System Interconnection) layer three, i.e. a network layer, is first compiled on layer two, possibly from a plural number of frames, and then relayed upward in the protocol stack to layer three. In the network layer, the IP protocol checks the IP address of the packet's receiver and searches a routing table for the next node where the packet is to be transmitted to. IP addresses are globally unambiguous.

In circuit-switched networks, so-called label switching and IP switching can be used to assist in the transfer of IP packets. The switching is carried out directly in layer two of the OSI model such that instead of being compiled of frames of layer two, the received IP packets are forwarded through the layer on the basis of a physical address included in a frame. In a broad sense, the label may be any local channel identifier of a transmitting node. EP 0982909 discloses a solution for Internet protocol flow detection.

A problem with packet networks employing label switching is that the switching requires a relatively large amount of configuration and transmission of configuration data. In addition, the networks require a fairly extensive amount of signalling between network elements. The transmission of the above data takes up capacity from the payload.

### BRIEF DESCRIPTION OF THE INVENTION

It is therefore an object of the invention to provide a method and equipment implementing the method to allow the above problems to be solved. More precisely, the invention aims at solving problems arising from the large header field size of packet networks and the complex configuration of circuit switching. This is achieved with a method according to the preamble, which is characterized by comprising the steps of dropping at least a part of the IP header to a lower protocol layer and transmitting the packet to the destination on the basis of the dropped part.

The object is also achieved with a method according to the preamble, which is characterized in that the IP header comprises a destination address from which a host part is dropped to a lower protocol layer, a label is formed from the host part of the destination address to label the packet, and the packet is transferred to the destination indicated by the label.

The invention further relates to a packet network applying an IP protocol for transmitting a packet from a source to a destination on the basis of an IP header.

The packet network of the invention is characterized in that the packet network comprises a first means arranged to drop at least a part of a destination address included in the IP header to a lower protocol layer to serve as a label and a second means arranged to transmit the packet to the destination indicated by the label.

In addition, the packet network of the invention is characterized in that the packet network comprises a first means arranged to drop at least a part of the destination address included in the IP header to a lower protocol layer; a third means arranged to form a label from a host part of the destination address for labelling the packet; and a second means arranged to transmit the packet to the destination indicated by the label.

The preferred embodiments of the invention are disclosed in the dependent claims.

An underlying idea of the invention is that a part of the IP destination address is dropped to a lower protocol layer, and a label is formed of the dropped address part to label the packet to be transmitted.

The method and packet network of the invention provide a number of advantages. In the invention, a label is formed of the IP destination address to be used as a destination address in the transfer of packets. The label occupies less space than a full-length IP address, and the saved space can thus be used for other purposes, for example for the transfer of payload. The space needed by the destination address is reduced without additional network configuration or signalling being needed. The invention enables fast transfer of packets.

### BRIEF DESCRIPTION OF THE DRAWINGS

In the following the invention will be described in connection with the preferred embodiments and with reference to the accompanying drawings, in which
Figure 1 illustrates a first embodiment of a network;
Figure 2 illustrates a protocol stack at different points of the network;
Figure 3 illustrates a second embodiment of the network;
Figure 4 illustrates the network in greater detail.

### DETAILED DESCRIPTION OF THE INVENTION

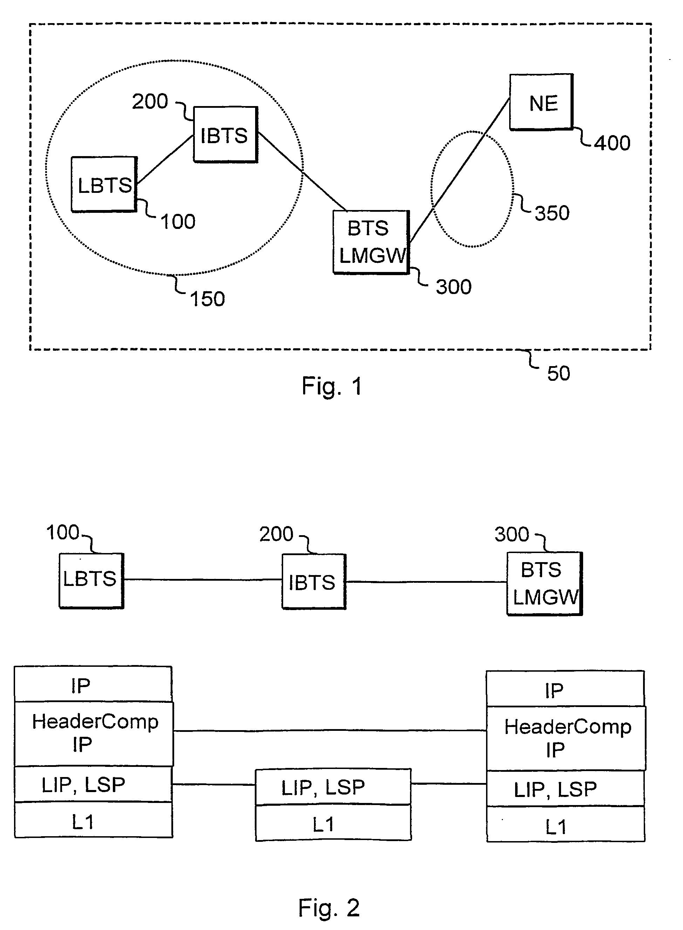

With reference to Figure 1, a network 50 comprises network elements 100, 200, 300 and 400. In addition, the network comprises a packet network domain 150 in which the data transmission is narrowband and it is carried out using packet switching and circuit switching. Further, the network comprises a network domain 350 in which the data transmission is broadband. As shown in the Figure, the network elements 100, 200 are located in the network domain 150. The Figure also shows that the broadband network domain 350 is between the network element 300 and the network element 400.

The network shown in Figure 1 may be for example the IPRAN (Internet Protocol Radio Access Network). Data transmission in the broadband domain is based on the use of optical fibres, for example, whereas in the narrowband domain it is based on the use of microwave radios, for example. The invention is not, however, restricted to IPRANs alone, but it may be applied in all IP networks, for example, that meet certain requirements. One of the requirements is that the network must be provided with a specific kind of subnetwork. More precisely, the subnetwork must be provided with CIDR (Classless Interdomain Routing) addresses, for example. One and the same address prefix is used within the area of the subnetwork, the prefix becoming more accurate, i.e. longer, as the process moves downward in the network from a higher network layer to a lower one.

For example, the network element 100 may be an LBTS (Leaf Base Transceiver Station), the network element 200 an IBTS (Intermediate BTS), and the network element 300 an LMGW (Last Mile Gateway) element. From the point of view of data transmission, the network elements serve as so-called node points, which all have a separate IP address. The network elements are capable of carrying out switching in protocol layer two. More precise, they are able to perform it on the basis of a VPI/VCI identifier, for example.

An IP address is composed of a number pair, a first element of the pair comprising a network part and a second element a host part. IP addresses are 32-bit numbers typically represented in the form of decimal numbers separated by dots. This is known as a dotted decimal notation in which each number is represented by the numerical value of one octet, i.e. a group of eight bits, given in a decimal form. For example, an address 131.11.9.3 denotes an IP address in which 131.11 is the network part and 9.3 the host part.

Figure 2 shows a protocol stack at different points of the network. The layers below each network element LBTS, IBTS and LMGW illustrate the respective protocol structures of the network elements. For example, the protocol stack below the LBTS element comprises an IP layer, a compressed IP layer, an LIP/LPS (Label Switched IP / Label Switched Path) layer and an L1 layer.

The network element 100 and the network element 300 are capable of compressing IP header fields. Compression allows an IP address to be modified to save bandwidth, but, at the same time, the possibility to apply IP routing is lost. For a network element to be able to compress IP header fields, it must appear in a network structure in which a second compressing network element is at a distance of precisely one hop from the first network element. This is required because in a configuration of multiple hops, the network element 200, which is between the network elements 100, 300, is not able to make a routing decision on the basis of a compressed header. The one-hop requirement relating to the network is needed because of the IP layer. To meet the requirement, the network elements performing compression are connected to the same physical transmission path. Another way to meet the requirement is to arrange for the IP layer a 'view' of one hop by means of lower layer switching, i.e. a virtual circuit.

The network can be implemented for example such that the compressing network elements are connected to the same physical transmission path. Another way to implement the network is to use lower layer switching, i.e. a virtual connection, to arrange a network configuration of the one-hop type for the IP layer. In, practice this means that in a solution according to Figure 2 the network element 2 cannot make a routing decision on the basis of a compressed IP header, but it switches the packets on the basis of a label produced in a lower layer.

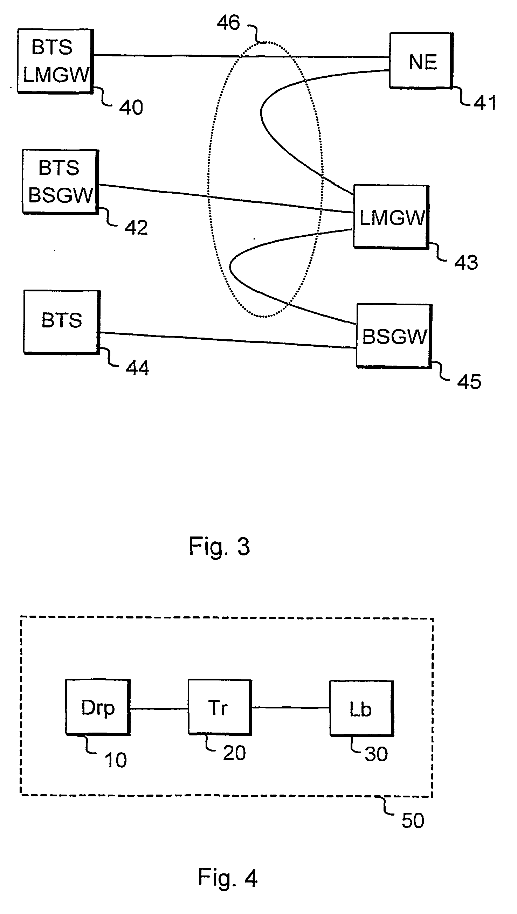

Figure 3 shows a second embodiment of the network. The network comprises network elements 40, 41, 42, 43, 44, 45 and an IP network part 46. The network elements 40, 43 are LMGW elements and the network elements 42, 45 BSGW elements. More precisely, the network elements 40, 42, 44 are base stations, for example. Figure 3 shows that the IP network at least partly interconnects the network elements 40 and 41, the network elements 41 and 43, the network elements 42 and 43, the network elements 43 and 45, and the network elements 44 and 45.

The network element 40 is able to carry out LMGW functions also locally, whereas the network element 42 is connected by a transmission path to the remote end network element 43 where LMGW functions can be carried out. The network element 44 is connected to the LMGW element 43 via the BSGW element 45. As shown in the Figure, the IP protocol is not applied on the transmission path interconnecting the network element 44 and the BSGW element 45.

Figure 4 shows the network 50 in greater detail, the network comprising a first means 10, second means 20 and third means 30. Each of the above mentioned network elements may comprise the means 10, 20, 30. The first means 10 is arranged to drop at least a part of the destination address given in the address field to a protocol layer below the one used by the address field. For example, from a destination address 131.11.10.2 the first means 10 moves the host part 10.2 to a lower protocol layer, i.e. from protocol layer three to protocol layer two.

In practice the dropping of an address part means that lower layer labels are derived from the IP address and therefore lower layer signalling is not needed. The topology information carried by the IP routing can thus be utilized when virtual circuits are formed. The dropping of the address part and compression can be carried out as separate functions or as a single function. However, if IP header overhead and layer two signalling are to be avoided, compression and the dropping of the address part are required. The dropping of the address part supports compression in an IPRAN-type network in particular.

The second means 20 is arranged to use the dropped address to transfer or send the packet to the destination in a subnetwork. In other words, the entire IP address is not needed for transferring the packet in this case. The address field parts dropped to the lower protocol layer by the first means 10 represent the least significant bits. The first means 10 may drop for example 16 least significant bits from the address field to the lower protocol layer. In addition, the second means 20 is arranged to use packet routing information to form virtual circuits in the lower layer for transmitting packets to their destination addresses.

The third means 30 is arranged to form a label from the host part of the destination address, the label being used for labelling the packet before it is forwarded. The label formed by the third means 30 comprises a VPI/VCI identifier. Other possible labels are a PCM/TSL identifier of a TDM switch, MPLS (Multiprotocol Label Switching) router label or the DLCI (Data Link Connection Identifier) field data of a Frame Relay switch. When the packet has been labelled, the second means 20 transfer it to the destination indicated by the label. The functions of the means 10, 20, 30 can in principle be integrated in one and the same means, and they are preferably carried out by software.

The forwarding of IP addresses is based on subnetworking in which all hosts or devices residing in the subnetwork share a common initial address part, whereas the host parts of the subnetwork addresses are different for different devices. Table 1 below depicts a possible address scheme that can be used in the packet network of the invention.

**Table 1**

| Elem. | IP address | IP subnetwork | IP host address |
|---|---|---|---|
| LMGW | 192.168.10.2 | 192.168.0.0/16 | 10.2 |
| IBTS | 192.168.8.4 | 192.168.0.0/16 | 8.4 |
| LBTS | 192.168.9.3 | 192.168.0.0/16 | 9.3 |

Table 1 shows that the subnetwork address consists of 16 most significant bits of a 32-bit IP address. For example, the most significant bits in the subnetwork address of the LMGW element are formed by the address part 131.11. All hosts residing in the same subnetwork share the same subnetwork address. The host address consists of the 16 least significant bits of the address. Within the subnetwork the host address is an individual address and can thus be used as a label in layer 2 switching.

The transfer of an IP packet is based on information about the subnetwork address system, the subnetwork topology and the default routes of the subnetworks. Assume that the default route passes through the LMGW element. The IBTS element in the networks of Figures 1 and 2 can then forward the packets according to transfer table 2 below, for example, which is obtained on the basis of the network topology information provided by IP routing.

**Table 2**

| IP destination address | next IP address | output gate |
|---|---|---|
| 192.168.10.2 | 192.168.10.2 | IBTS -> LMGW |
| 192.168.8.4 | own host | - |
| 192.168.9.3 | 192.168.9.3 | IBTS -> LBTS |
| other | 192.168.10.2 | IBTS -> LMGW |

The transfer table shows that each IP packet with the destination address 192.168.9.3 is transferred from the IBTS element to the LBTS element. The table also shows that IP packets the destination address of which is 192.168.8.4 are not transferred any further from the IBTS element, but they are processed in the IBTS element. Further, the table shows that IP packets having IP addresses different from the above two are forwarded from the IBTS element to the LMGW element.

The packet network may apply ATM technology, for example, in which case IP flow switching takes place on the basis of a separate VPINCI identifier, or AMT virtual circuit, determined for the flow and operating on the basis of ATM cell switching. In the method of the invention, the lower level where the address is dropped to forms virtual circuits on the basis of the topology information provided by the IP routing and not on the basis of the ATM signalling, for example. In one embodiment the IBTS element comprises an ATM switch, which may be configured to switch all cells provided with a specific label to the LMGW element without changing the address fields. In the described solution the cells carrying a label in which VPI = 10, VCI = 2 are switched to the LMGW element without changing the address fields.

The following table shows a possible ATM switching configuration that can be used in the IBTS element, for example:

**Table 3**

| Input gate | input (VPI, VCI) | output gate | output (VPI, VCI) |
|---|---|---|---|
| LBTS - IBTS | (10,2) | IBTS-LMGW | (10,2) |
| LMGW - IBTS | (9, 3) | IBTS-LBTS | (9, 3) |

In a circuit-switched network, the label values, i.e. the VPI and VCI values, do not change in the intermediate switches possibly located in the IBTS element, for example. A further characteristic of the disclosed packet network is that the values can be derived from the IP host addresses. Since the label values do not change, they can be used for unambiguously indicating different points in the subnetwork.

The packet network 150 of Figure 1 is arranged to carry out one-to-one mapping between the subnetwork IP address and the subnetwork label values. The sender of the packet may thus always replace the destination IP address with a label, or add the label to the destination IP address. Between the source and the destination there are so-called intermediate nodes, which may form an ATM switching table on the basis of the IP transfer table.

The ATM switching configuration shown in table 3 is obtained using the information provided by the transfer table 2. More precisely, the VPI/VCI identifiers in table 2 are formed of the two last octets of the IP destination addresses in table 3.

If the disclosed packet network is for example an ATM network, MPLS switching may be freely used in the network and thus label values may be freely selected. This means that there is another table for the mapping, the table being applied between the IP subnetworks and the labels. In other words, at least two freely selectable values can be used in the label.

Between the IP header field and the layer 2 label there must be one-to-one correspondence, which in this case means a mathematical bijection. A characteristic of a bijection is that a function has an inverse function, which allows the function's original value to be calculated. This mathematical method is used to be able to reconstruct the IP address part used for forming the layer 2 label from a corresponding label in an unambiguous manner.

Table 4 below illustrates the relationship between the IP header and the channel identifier. Table 4 assumes that the invention is implemented using the eight least important bits (the host address) and the DSCP field included in the destination address given in the IP header. It is further assumed that ATM virtual channels are in use in layer 2. As shown by table 4, the IP address and the channel identifier are presented as specific number pairs. A first number pair comprises the IP address and the DSCP field of the destination and a second number pair comprises the VPINCI identifiers.

**Table 4**

| Function | Value | Use |
|---|---|---|
| f(IP-host, DSCP) | (VPI, VCI) | A station sending to address (IP-host, DSCP) sets the ATM virtual circuit identifier. The ATM cells are switched through ATM switches located between the cells and given to the IP layer only at the end part of the connection. |
| f¹(VPI, VCI) | (IP-host, DSCP) | The station receiving from the ATM virtual circuit deducts the values of the IP-host and DSCP fields directly from the channel identifier. The values can be removed from the IP header by compression. |

The setting of the ATM virtual circuit means that an IP datagram, i.e. an IP packet, is segmented into ATM cells and the VPI/VCI identifiers are set as identifiers for the virtual channel of the cell headers. The ATM switch referred to in table 4 may be located in the IBTS, for example, and it is used for the switching of cells between the LMGW and the LBTS.

In addition to the description relating to the IP header and the channel identifier, it is required that the link layer does not reserve channel identifiers based on the IP header from all of its network connections. For example, the ATM switch may transmit a VC (Virtual Channel) cell of a channel arriving through a gate. A cell received over the transmission path is thus assumed to carry a specific channel identifier. In ordinary ATM switching, however, the value of the channel identifier changes, but in the method of the invention the ATM switch is configured such that the identifier does not necessarily change. Instead, in an embodiment of the invention, the output gate is required to use the same channel identifier as well. In other words, in that case the VPINCI identifiers remain unchanged when the packet travels through the switch.

Although the invention is described above with reference to an example according to the accompanying drawings, it is apparent that the invention is not restricted to it, but may vary in many ways within the inventive idea disclosed in the claims.

## Claims

1. A method for transmitting a packet from a source to a destination on the basis of an IP header in a packet network employing an IP protocol, **characterized by** comprising the steps of
dropping at least a part of the IP header to a lower protocol layer; and
transmitting the packet to the destination on the basis of the dropped part.

2. A method according to claim 1, **characterized in that**
the IP header comprises a destination address from which a host part is dropped to a lower protocol layer, comprising the steps of
a label is formed from the host part of the destination address to label the packet; and
the packet is transferred to the destination indicated by the label.

3. A method according to claim 1, **characterized in that** the header comprises a destination address from which least significant bits are dropped to the lower protocol layer for forming a channel identifier for the packet to be transmitted.

4. A method according to claim 2, **characterized in that** least significant bits are dropped from the destination address to the lower protocol layer for forming a channel identifier for the packet to be transmitted.

5. A method according to claim 1, **characterized in that** the header comprises a destination address from which 16 least significant bits are dropped to the lower protocol layer for forming a channel identifier for the packet to be transmitted.

6. A method according to claim 2, **characterized in that** 16 least significant bits are dropped from the destination address to the lower protocol layer for forming a channel identifier for the packet to be transmitted.

7. A method according to claim 1, **characterized in that** the header comprises a destination address from which least significant bits are dropped to the lower protocol layer and the dropped bits are used for forming VPI/VCI identifiers for an ATM subnetwork.

8. A method according to claim 2, **characterized in that** least significant bits are dropped from the destination address to the lower protocol layer and the dropped bits are used for forming VPI/VCI identifiers for an ATM subnetwork.

9. A method according to claim 2, **characterized in that** the packet is transferred to the destination address on a channel identified on the basis of the label.

10. A method according to claim 2, **characterized in that** virtual circuits are formed in the lower layer on the basis of the packet's routing information for transmitting the packet to the destination indicated by the label.

11. A method according to claim 1 or 2, **characterized in that** least significant bits are dropped from the destination address to the lower protocol layer to serve as the destination address.

12. A method according to claim 2, **characterized in that** 16 least significant bits are dropped from the destination address to the lower protocol layer and the dropped bits are used for forming a label.

13. A method according to claim 1 or 2, **characterized in that** the dropped address part is used for forming VPINCI identifiers for an ATM subnetwork.

14. A method according to claim 1 or 2, **characterized in that** the destination address comprises a host part which is dropped from IP protocol layer three to layer two.

15. A method according to claim 1 or 2, **characterized in that** the packet is transmitted to the destination on the basis of the destination address given in the destination address field of the IP header, part of the destination address being dropped to a lower protocol layer.

16. A packet network applying an IP protocol for transmitting a packet from a source to a destination on the basis of an IP header, **characterized in that**
the packet network comprises a first means (10) arranged to drop at least a part of the destination address included in the IP header to a lower protocol layer to serve as a label; and
a second means (20) arranged to transmit the packet to the destination indicated by the label.

17. A packet network according to claim 16, **characterized in that** the packet network comprises
a first means (10) arranged to drop at least a part of the destination address included in the IP header to a lower protocol layer;
a third means (30) arranged to form a label from the host part of the destination address for labelling the packet; and
a second means (20) arranged to transmit the packet to the destination indicated by the label.

18. A packet network according to claim 16 or 17, **characterized in that** the label is the channel identifier of said lower protocol layer and it is arranged to identify the transmission channel to be used in the transfer of the packet.

19. A packet network according to claim 16 or 17, **characterized in that** the second means (20) is arranged to form virtual circuits in the lower layer on the basis of the packet's routing information for transmitting the packet to the destination indicated by the label.

20. A packet network according to claim 16 or 17, **characterized in that** the first means (10) is arranged to drop least significant bits of the address field to the lower protocol layer.

21. A packet network according to claim 16 or 17, **characterized in that** the first means (10) is arranged to drop least significant bits of the address field to the lower protocol layer.

22. A packet network according to claim 16 or 17, **characterized in that** the first means (10) is arranged to drop least significant bits of the address field to the lower protocol layer and to form a label from the dropped bits.

23. A packet network according to claim 16 or 17, **characterized in that** the packet network is implemented using ATM technology and the third means (30) is arranged to form VPINCI identifiers for the ATM subnetwork from the address dropped by the first means (10).

24. A packet network according to claim 16 or 17, **characterized in that** the label comprises two freely selectable values.

25. A packet network according to claim 16 or 17, **characterized in that** the IP header is an additional header field.

26. A packet network according to claim 16 or 17, **characterized in that** the first means (10) is arranged to drop the host address from the IP protocol layer three to layer two.

## Patentansprüche

1. Verfahren zum Übertragen eines Pakets von einer Quelle an ein Ziel, auf der Grundlage eines IP-Datenkopfes in einem Paketnetzwerk, welches ein IP-Protokoll anwendet, **gekennzeichnet, durch** Umfassen die Schritte:
- Fallenlassen mindestens eines Teils des IP-Datenkopfes auf eine niedrigere Protokollschicht; und
- Übertragen des Pakets an den Zielort auf Grundlage des fallen gelassenen Teils.

2. Verfahren nach Anspruch 1, **dadurch gekennzeichnet, dass**
- der IP-Datenkopf eine Zieladresse umfasst, von der ein Hostteil auf eine niedrigere Protokollschicht fallen gelassen wird, umfassend die Schritte
- eine Kennzeichnung wird aus dem Hostteil der Zieladresse gebildet, um das Paket zu kennzeichnen; und
- das Paket wird an das Ziel übermittelt, das durch die Kennzeichnung angegeben wird.

3. Verfahren nach Anspruch 1, **dadurch gekennzeichnet, dass** der Datenkopf eine Zieladresse umfasst, von der die Bits mit dem geringsten Stellenwert auf die niedrigere Protokollschicht fallen gelassen werden, um eine Kanalkennung für das zu übertragende Paket zu bilden.

4. Verfahren nach Anspruch 2, **dadurch gekennzeichnet, dass** die Bits mit dem geringsten Stellenwert von der Zieladresse auf die niedrigere Protokollschicht fallen gelassen werden, um eine Kanalkennung für das zu übertragende Paket zu bilden.

5. Verfahren nach Anspruch 1, **dadurch gekennzeichnet, dass** der Datenkopf eine Zieladresse umfasst, von der 16 Bits mit dem geringsten Stellenwert zu einer niedrigeren Protokollschicht fallen gelassen werden, um eine Kanalkennung für das zu übertragende Paket zu bilden.

6. Verfahren nach Anspruch 2, **dadurch gekennzeichnet, dass** 16 Bits mit dem geringsten Stellenwert von der Zieladresse zu der niedrigeren Protokollschicht fallen gelassen werden, um eine Kanalkennung für das zu übertragende Paket zu bilden.

7. Verfahren nach Anspruch 1, **dadurch gekennzeichnet, dass** der Datenkopf eine Zieladresse umfasst, von der Bits mit dem geringsten Stellenwert zu der niedrigeren Protokollschicht fallen gelassen werden und die fallen gelassenen Bits verwendet werden, um VPI/VCI-Kennungen für ein ATM-Unternetzwerk zu bilden.

8. Verfahren nach Anspruch 2, **dadurch gekennzeichnet, dass** Bits mit dem geringsten Stellenwert von der Zieladresse zu der niedrigeren Protokollschicht fallen gelassen werden und die fallen gelassenen Bits verwendet werden, um VPI/VCI-Kennungen für ein ATM-Unternetzwerk zu bilden.

9. Verfahren nach Anspruch 2, **dadurch gekennzeichnet, dass** das Paket auf einem Kanal, der auf Grundlage der Kennzeichnung identifiziert wird, an die Zieladresse übermittelt wird.

10. Verfahren nach Anspruch 2, **dadurch gekennzeichnet, dass** virtuelle Schaltung in der niedrigeren Schicht gebildet werden, auf der Grundlage der Routing-Information des Pakets, um das Paket an das Ziel zu übertragen, welches durch die Kennzeichnung angegeben wird.

11. Verfahren nach Anspruch 1 oder 2, **dadurch gekennzeichnet, dass** Bits mit dem geringsten Stellenwert von der Zieladresse zu der niedrigeren Protokollschicht fallen gelassen werden, um als die Zieladresse zu dienen.

12. Verfahren nach Anspruch 2, **dadurch gekennzeichnet, dass** 16 Bits mit dem geringsten Stellenwert von der Zieladresse zu der niedrigeren Protokollschicht fallen gelassen werden und die fallen gelassenen Bits verwendet werden, um einen Kennzeichnung zu bilden.

13. Verfahren nach Anspruch 1 oder 2, **dadurch gekennzeichnet, dass** der fallen gelassene Adressenteil verwendet wird, um VPI/VCI-Kennungen für ein ATM-Unternetzwerk zu bilden.

14. Verfahren nach Anspruch 1 oder 2, **dadurch gekennzeichnet, dass** die Zieladresse einen Hostteil umfasst, welcher von der IP-Protokollschicht drei auf Schicht zwei fallengelassen wird.

15. Verfahren nach Anspruch 1 oder 2, **dadurch gekennzeichnet, dass** das Paket auf der Grundlage der Zieladresse, welche in dem Zieladressenfeld des IP-Datenkopfes gegeben ist, an das Ziel übertragen wird, wobei ein Teil der Zieladresse auf eine niedrigere Schicht fallen gelassen wird.

16. Paketnetzwerk, welches ein IP-Protokoll anwendet, zum Übertragen eines Pakets von einer Quelle an ein Ziel, auf der Grundlage eines IP-Datenkopfes **dadurch gekennzeichnet, dass**
- das Paketnetzwerk ein erstes Mittel (10) umfasst, welches eingerichtet ist, mindestens einen Teil der Zieladresse, welche in dem IP-Datenkopf eingeschlossen ist, auf eine niedrigere Protokollschicht fallen zu lassen, um als Kennzeichnung zu dienen; und
- ein zweites Mittel (20), welches eingerichtet ist, das Paket an das Ziel zu übertragen, das durch die Kennzeichnung angegeben wird.

17. Paketnetzwerk nach Anspruch 16, **dadurch gekennzeichnet, dass** das Paketnetwerk umfasst:
- ein erstes Mittel (10), welches eingerichtet ist, mindestens einen Teil der Zieladresse, die in dem IP-Datenkopfes eingeschlossen ist, auf eine niedrigere Protokollschicht fallen zu lassen;
- ein drittes Mittel (30), welches eingerichtet ist, eine Kennzeichnung aus dem Hostteil der Zieladresse zu bilden, um das Paket zu kennzeichnen; und
- ein zweites Mittel (20), welches eingerichtet ist, das Paket an das Ziel, das durch die Kennzeichnung angegeben wird, zu übertragen.

18. Paketnetzwerk nach Anspruch 16 oder 17, **dadurch gekennzeichnet, dass** die Kennzeichnung die Kanalkennung der niedrigeren Protokollschicht ist und es eingerichtet ist, den Übertragungskanal, der in der Übertragung des Pakets verwendet werden soll, zu identifizieren.

19. Paketnetzwerk nach Anspruch 16 oder 17, **dadurch gekennzeichnet, dass** das zweite Mittel (20) eingerichtet ist, virtuelle Schaltung in der unteren Schicht zu bilden, auf der Grundlage der Routing-Information des Pakets, um das Paket an das Ziel zu übertragen, welche durch die Kennzeichnung angegeben wird.

20. Paketnetzwerk nach Anspruch 16 oder 17, **dadurch gekennzeichnet, dass** das erste Mittel (10) eingerichtet ist, Bits mit dem geringsten Stellenwert des Adressfelds zu der niedrigeren Protokollschicht fallen zu lassen.

21. Paketnetzwerk nach Anspruch 16 oder 17, **dadurch gekennzeichnet, dass** das erste Mittel (10) eingerichtet ist, Bits mit dem geringsten Stellenwert des Adressfeldes zu der niedrigeren Protokollschicht fallen zu lassen.

22. Paketnetzwerk nach Anspruch 16 oder 17, **dadurch gekennzeichnet, dass** das erste Mittel (10) eingerichtet ist, Bits mit dem geringsten Stellenwert des Adressenfeldes zu der niedrigeren Protokollschicht fallen zu lassen und eine Kennzeichnung aus den fallen gelassenen Bits zu bilden.

23. Paketnetzwerk nach Anspruch 16 oder 17, **dadurch gekennzeichnet, dass** das Paketnetzwerk unter Verwendung von ATM-Technologie implementiert ist und das drittes Mittel (30) eingerichtet ist, VPI/VCI-Kennungen für das ATM-Unternetzwerk aus der von dem ersten Mittel fallen gelassene Adresse (10) zu bilden.

24. Paketnetzwerk nach Anspruch 16 oder 17, **dadurch gekennzeichnet, dass** die Kennzeichnung zwei frei wählbare Werte umfasst.

25. Paketnetzwerk nach Anspruch 16 oder 17, **dadurch gekennzeichnet, dass** der IP-Datenkopf ein zusätzliches Datenkopffeld ist.

26. Paketnetzwerk nach Anspruch 16 oder 17, **dadurch gekennzeichnet, dass** das erste Mittel (10) eingerichtet ist, die Hostadresse von der IP-Protokollschicht drei auf Schicht zwei fallen zu lassen.

## Revendications

1. Procédé de transmission d'un paquet à partir d'une source vers une destination sur la base d'un en-tête IP dans un réseau de paquets employant un protocole IP, **caractérisé en ce qu'**il comprend les étapes consistant à :
abandonner au moins une partie de l'en-tête IP sur une couche inférieure du protocole ;
et
transmettre le paquet à la destination sur la base de la partie abandonnée.

2. Procédé selon la revendication 1, **caractérisé en ce que**
l'en-tête IP comprend une adresse de destination dont une partie d'accueil est abandonnée sur une couche inférieure du protocole, comprenant les étapes consistant à
former une étiquette à partir de la partie d'accueil de l'adresse de destination pour étiqueter le paquet ; et
transférer le paquet vers la destination indiquée par l'étiquette.

3. Procédé selon la revendication 1, **caractérisé en ce que** l'en-tête comprend une adresse de destination dont des bits les moins significatifs sont abandonnés dans la couche inférieure du protocole dans le but de former un identifiant de voie pour que le paquet soit transmis.

4. Procédé selon la revendication 2, **caractérisé en ce que** des bits les moins significatifs sont abandonnés depuis l'adresse de destination dans la couche inférieure du protocole dans le but de former un identifiant de voie pour que le paquet soit transmis.

5. Procédé selon la revendication 1, **caractérisé en ce que** l'en-tête comprend une adresse de destination dont 16 bits les moins significatifs sont abandonnés dans la couche inférieure du protocole dans le but de former un identifiant de voie pour que le paquet soit transmis.

6. Procédé selon la revendication 2, **caractérisé en ce que** 16 bits les moins significatifs sont abandonnés depuis l'adresse de destination dans la couche inférieure du protocole dans le but de former un identifiant de voie pour que le paquet soit transmis.

7. Procédé selon la revendication 1, **caractérisé en ce que** l'en-tête comprend une adresse de destination dont des bits les moins significatifs sont abandonnés dans la couche inférieure du protocole et où les bits abandonnés sont utilisés pour former des identifiants VPI/VCI pour un sous-réseau ATM.

8. Procédé selon la revendication 2, **caractérisé en ce que** des bits les moins significatifs sont abandonnés depuis l'adresse de destination dans la couche inférieure du protocole et où les bits abandonnés sont utilisés dans le but de former des identifiants VPI/VCI destinés à un sous-réseau ATM.

9. Procédé selon la revendication 2, **caractérisé en ce que** le paquet est transféré vers l'adresse de destination sur une voie identifiée sur la base de l'étiquette.

10. Procédé selon la revendication 2, **caractérisé en ce que** des circuits virtuels sont formés dans la couche inférieure sur la base des informations d'acheminement du paquet dans le but de transmettre le paquet vers la destination indiquée par l'étiquette.

11. Procédé selon la revendication 1 ou 2, **caractérisé en ce que** des bits les moins significatifs sont abandonnés depuis l'adresse de destination dans la couche inférieure du protocole pour servir d'adresse de destination.

12. Procédé selon la revendication 2, **caractérisé en ce que** 16 bits les moins significatifs sont abandonnés depuis l'adresse de destination dans la couche inférieure du protocole et **en ce que** les bits abandonnés sont utilisés dans le but de former une étiquette.

13. Procédé selon la revendication 1 ou 2, **caractérisé en ce que** la partie abandonnée de l'adresse est utilisée pour former des identifiants VPI/VCI pour un sous réseau ATM.

14. Procédé selon la revendication 1 ou 2, **caractérisé en ce que** l'adresse de destination comprend une partie d'accueil qui est abandonnée depuis la couche trois du protocole IP dans la couche deux.

15. Procédé selon la revendication 1 ou 2, **caractérisé en ce que** le paquet est transmis vers la destination sur la base de l'adresse de destination donnée dans le champ d'adresse de destination de l'en-tête IP, une partie de l'adresse de destination étant abandonnée dans la couche inférieure du protocole.

16. Réseau de paquets appliquant un protocole IP destiné à transmettre un paquet d'une source vers une destination sur la base d'un en-tête IP, **caractérisé en ce que**
le réseau de paquets comprend un premier moyen (10) agencé pour abandonner au moins une partie de l'adresse de destination incluse dans l'en-tête IP sur une couche inférieure du protocole pour servir d'étiquette ; et
un second moyen (20) agencé pour transmettre le paquet à la destination indiquée par l'étiquette.

17. Réseau de paquets selon la revendication 16, **caractérisé en ce que** le réseau de paquets comprend
un premier moyen (10) agencé pour abandonner au moins une partie de l'adresse de destination incluse dans l'en-tête IP sur une couche inférieure du protocole ;
un troisième moyen (30) agencé pour former une étiquette de la partie d'accueil de l'adresse de destination dans le but d'étiqueter le paquet ; et
un deuxième moyen (20) agencé pour transmettre le paquet vers la destination indiquée par l'étiquette.

18. Réseau de paquets selon la revendication 16 ou 17, **caractérisé en ce que** l'étiquette est l'identifiant de la voie de ladite couche inférieure du protocole et **en ce qu'**il est agencé pour identifier la voie de transmission à utiliser dans le transfert du paquet.

19. Réseau de paquets selon la revendication 16 ou 17, **caractérisé en ce que** le deuxième moyen (20) est agencé pour former des circuits virtuels dans la couche inférieure sur la base des informations d'acheminement du paquet dans le but de transmettre le paquet vers la destination indiquée par l'étiquette.

20. Réseau de paquets selon la revendication 16 ou 17, **caractérisé en ce que** le premier moyen (10) est agencé pour abandonner des bits les moins significatifs du champ d'adresse dans la couche inférieure du protocole.

21. Réseau de paquets selon la revendication 16 ou 17, **caractérisé en ce que** le premier moyen (10) est agencé pour abandonner des bits les moins significatifs du champ d'adresse dans la couche inférieure du protocole.

22. Réseau de paquets selon la revendication 16 ou 17, **caractérisé en ce que** le premier moyen (10) est agencé pour abandonner des bits les moins significatifs du champ d'adresse dans la couche inférieure du protocole et pour former une étiquette à partir des bits abandonnés.

23. Réseau de paquets selon la revendication 16 ou 17, **caractérisé en ce que** le réseau de paquets est mis en oeuvre à l'aide d'une technologie ATM et **en ce que** le troisième moyen (30) est agencé de façon à former des identifiants VPI/VCI destinés au sous réseau ATM à partir de l'adresse abandonnée par le premier moyen (10).

24. Réseau de paquets selon la revendication 16 ou 17, **caractérisé en ce que** l'étiquette comprend deux valeurs librement sélectionnables.

25. Réseau de paquets selon la revendication 16 ou 17, **caractérisé en ce que** l'en-tête IP est un champ supplémentaire de l'en-tête.

26. Réseau de paquets selon la revendication 16 ou 17, **caractérisé en ce que** le premier moyen (10) est agencé pour abandonner l'adresse d'accueil de la couche trois du protocole IP dans la couche deux.
